# EUROPEAN PATENT APPLICATION

(11) **EP 2 963 952 A1**
(43) Date of publication of application: **06.01.2016**
(21) Application number: 14306051.5
(22) Date of filing: 30.06.2014
(51) Int. Cl.: H04W 4/00, H04W 4/02, H04L 29/06, H04W 12/00, H04W 12/08

(54) **Method for obtaining a secured communication signal between a mobile device and a stationary device**

(71) Applicant: Intellicore Services, 06560 Valbonne Sophia Antipolis (FR)
(72) Inventor: Trotobas, Christian, 06130 Plascassier (FR); Martiquet, Nicolas, 06600 Antibes (FR)
(74) Representative: de Zeeuw, Johan Diederick

(57) **Abstract**

The present invention relates to a method for securing a communication signal between a mobile device and a stationary device, the mobile device and the stationary device being configured for short distance communication in a determined zone around the stationary device, wherein the mobile device comprises receiving means connected to storage means and a Global Positioning System (GPS) application, the method comprising the steps of:
- establishing communication between the mobile device and the stationary device to thereby generate a communication signal;
- receiving the communication signal by means of the receiving means and storing the same in the storage means ;
- activating the GPS application to generate a parameter, wherein the value of the parameter corresponds to the geographical location of the mobile device;
- adding the parameter to the stored communication signal to obtain a secured communication signal;
- comparing the secured communication signal with a reference value.

## Description

### Introduction

The present invention relates to a method for securing communication signals between a mobile device and a stationary device, the mobile device and the stationary device being configured for short distance communication in a determined zone around the stationary device, wherein the mobile device comprises receiving means connected to storage means and a Global Positioning System (GPS) application.

The present invention relates to a method and device wherein a communication is possible between a mobile device and a stationary device, the stationary device being able to communicate with the mobile device by means of short distance communication. This short distance communication could comprise wireless communication protocols which are known in the prior art as Bluetooth® or other wireless communication protocols. Alternatively, the short distance communication could comprise Near Field Communication (NFC).

### Background of the invention

According to the prior art, it is known that a mobile device can receive information from a stationary device to provide information to the user of the mobile device of an event or activity in the vicinity of the stationary device. In case of NFC communication, the user of a mobile device can, for instance, position his mobile device in front of a tag in order to allow the mobile device to read the tag and to thereby initiate a communication procedure which allows the user to receive a specific amount of data on his mobile device. This sort of communication could be useful in, for instance, a store wherein the information received on the mobile device could comprise information about special offers which might be of interest for the user of the mobile device. Recently, Apple® has introduced iBeacons which are small, low-powered transmitters adapted to communicate with mobile devices in the vicinity of the iBeacons. iBeacons use small wireless transmitters equipped with Bluetooth low-energy (BLE) that can be detected by a mobile device at a wide variety of ranges, allowing for different actions depending on a distance from each beacon, without any specific prior action by the user. Sensing both region and range, the use of iBeacons provides for a sort of indoor location system with much greater precision than any GPS system could obtain indoor.

Possible use of iBeacons is again at the retail level whereby stores can use iBeacons as a means to draw customers inside. Once within the beacon's wireless region near the entrance, a retailer can transmit a coupon or sales promotion that could beckon potential customers. And once inside the store, several indoor beacons can allow the mobile device to triangulate a customer's position and allow the calculation of the micro location of a customer, to trigger information on the products near the customer.

Shop owners could award customers for spending a certain amount of time within their shop and provide coupons to customers who appear to have come back to the shop on a regular basis. For instance, iBeacons could also be used to identify a repeat customer, for example in a restaurant or at the counter of coffee shop. Once the repeat customer has been identified, the mobile device could propose to the repeat customer to prepare its usual command and start preparing the preferred food or drink of the customer who is still waiting in line to be served.

It should be understood that the use of iBeacons in a store is just an example of a huge variety of possibilities to use iBeacons. Another practical example for the use of iBeacons is the use of iBeacons in an area wherein the user of a mobile device spends time at different locations in a set environment. This environment could, for instance, be a trade show or a museum. An example of the use in a museum could be that when leaving the museum and entering the bookstore of the museum, the user of the mobile device could receive information about those artists who apparently have drawn the specific attention of the visitor during his or her visit in the museum. This information could be based on the information obtained by the mobile device with the use of iBeacons about the time a visitor has spent in front of paintings of a specific artist. This information could be used to direct the visitor to the bookstore of the museum and to the bookshelves containing books about said artist.

One drawback related to the known use of NFC communication means and of the use of iBeacons, when providing specific advantages to customers in the vicinity of either the NFC tags or iBeacons, is the fact that the security of the communication between a specific tag and the iBeacon with the mobile device is relatively limited. For instance, if the presence of a customer in front of one or more iBeacons could generate the reception of a coupon or discount for a specific product, the information received from the iBeacon could easily be duplicated by another stationary device, positioned in any location across the world, and then communicated using Bluetooth Low Energy to users of mobile devices which have never been in the vicinity of the original iBeacons. Therefore, it appears that there is need for securing a communication between either an NFC tag or an iBeacon and a mobile device in order to ascertain that the specific advantages such as a coupon or a discount are only received by those mobile devices that were actually in the vicinity of the original tags or iBeacons during the communication.

In view of the observations above, it is an object of the present invention to improve the security of communication over a short distance between a stationary device, such as a tag or an iBeacon and a mobile device.

The invention relates, according to a first aspect of the invention, to a method for securing a communication signal between a mobile device and a stationary device, the mobile device and the stationary device being configured for short distance communication in a determined zone around the stationary device, wherein the mobile device comprises receiving means connected to storage means and a Global Positioning System (GPS) application, the method comprising the steps of:
- establishing communication between the mobile device and the stationary device to thereby generate a communication signal;
- receiving the communication signal by means of the receiving means and storing the same in the storage means ;
- activating the GPS application to generate a parameter, wherein the value of the parameter corresponds to the geographical location of the mobile device;
- adding the parameter to the stored communication signal to obtain a secured communication signal;
- comparing the secured communication signal with a reference value.

According to the invention, when a communication is being established between a mobile device and a stationary device, the GPS application of the mobile device is activated to generate a parameter corresponding to the geographical location of the mobile device. The parameter generated by the GPS application can be added to the communication signal which was generated by the communication between the mobile device and the stationary device to obtain a secured communication signal. The secure communication signal can be compared to a reference value which comprises the expected communication signal associated with a stationary device and it's known geographical location. Only if the parameter generated by the GPS application of the mobile device corresponds to a determined parameter for the geographical location of the stationary device, the specific advantage such as a coupon or a discount can be authorised on the mobile device of a user.

In the text, the wording "reference value" is used to indicate any look-up table or database comprising a determined value with which the secured communication signal can be compared.

According to the present invention, it is possible that the mobile device is adapted to detect the presence of the stationary device and to detect that it (the said mobile device) is in the determined zone around said stationary device.

According to the present invention, it is possible that the stationary device and the mobile device are configured for communicating using Near Field Communication (NFC) protocol.

According to the present invention, it is possible that the stationary device and the mobile are configured to allow communication using a Quick Response Code (QR Code).

According to the present invention, it is possible that the stationary device is a transmitter.

According to the present invention, it is possible that the stationary device is adapted for communication with the mobile device using Bluetooth Low Energy™ technology.

According to the present invention, it is possible that the stationary device is adapted for communication with the mobile device using iBeacon technology.

According to the present invention, it is possible that the mobile device is adapted to detect the presence of the stationary device and to detect that it (the said mobile device) is in the determined zone around said stationary device.

According to the present invention, it is possible that the stationary device is adapted to detect the presence of the mobile device in the determined zone around said stationary device.

According to the present invention, it is possible that the mobile device comprises a connector for allowing the mobile device to have access to the Internet in order to connect the receiving means with storing means on the Cloud.

According to the present invention, it is possible that the method further comprises creating a database comprising a look-up table with reference values, wherein the look-up table comprises values of a second parameter associated with at least one stationary device and the corresponding geographical location of said at least one stationary device.

According to the present invention, it is possible that the method further comprises comparing the value of the first parameter corresponding to the geographical location of the mobile device generated by the GPS application of the mobile device with values of second parameters to retrieve a matching value between the first and the second parameters.

According to the present invention, it is possible that the method further comprises allowing the mobile device to receive an authorisation signal when a matching value is retrieved.

According to the present invention, it is possible that the method further comprises the step of allowing the mobile device to generate an alert when a matching value is not retrieved.

According to a second aspect of the invention, the invention relates to a computer program product comprising stored computer-executable instructions, which, when executed by a computer system, implements the method of any of claims 1 to 9.
According to a third aspect of the invention, the invention relates to a mobile device comprising communication means for allowing short distance communication with a stationary device to allow the mobile device receiving a communication signal from said stationary device, the mobile device further comprising a connection with a storing means for storing said communication signal, a Global Positioning System (GPS) application adapted to generate a parameter corresponding to the geographical position of said mobile device application, and processing means adapted to provide an instruction for the GPS application to generate a parameter wherein the value of the parameter corresponds to the geographical position of the mobile device upon establishment of a communication made between the mobile device and the stationary device, wherein processing means are adapted to add said parameter to said communication signal to obtain a secured communication signal and to store said secured communication signal in said storing means.

According to the invention, the mobile device comprises a connector for allowing the mobile device to access to the Internet.

According to the invention, it is possible that the processing means are adapted to compare the stored secured communication signal with information stored in a look up table in a database comprising information about stationary devices and their geographical position.

### Brief description of the drawings

The invention will be described in detail making reference to the accompanying drawings, wherein:

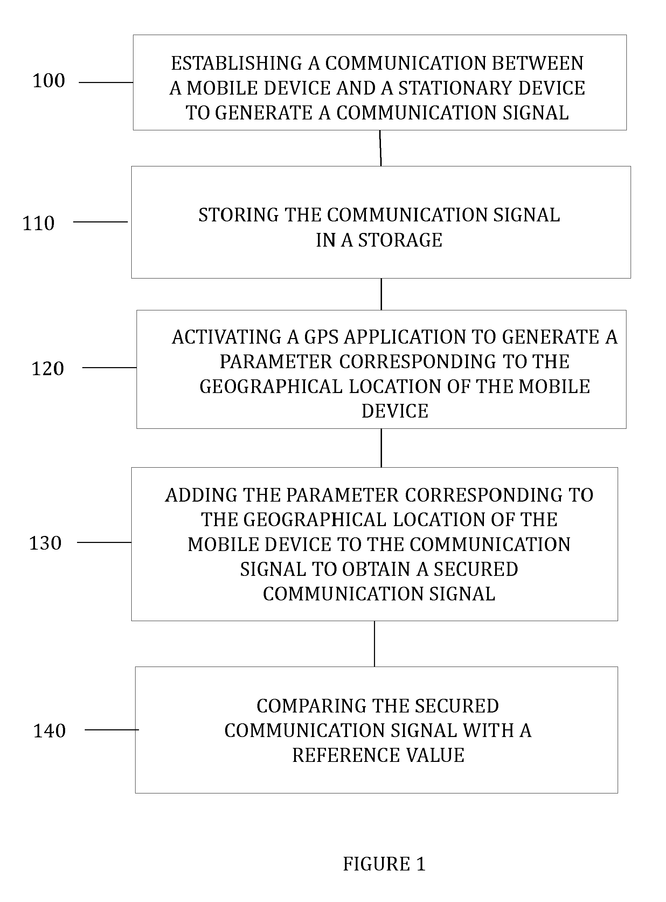

- Figure 1 shows, in the form of a flow chart, the different steps of the method according to the present invention.

In Figure 1, the method according to the present invention is shown in the form of a flow chart. As shown in the flow chart, in a first step 100 of the method, a communication is established between a mobile device and a stationary device to thereby generate a communication signal.

According to the present invention, the mobile device could for instance be a smartphone provided with a number of applications to allow the smartphone to communicate with a variety of stationary devices. To allow the smartphone to communicate with the specific tag such as a barcode or, for instance, a QR Code, the smartphone could be provided with a camera. In order to allow access to the internet, the smartphone could be provided with applications to allow communication of the smartphone over the Internet. To allow the smartphone to communicate with other mobile devices, the smartphone could be provided with applications to allow communication using, for instance, GSM, GPRS, or comparable protocols adapted to allow mobile device communication. Moreover, the smartphone could be provided with an application to allow wireless short distance communication, using for instance protocols like Bluetooth® or BLE.

As shown in figure 1, the second step 110 of the method according to the present invention comprises the storing of the communication signal in storage means to which the mobile device is connected, the communication signal being the result of the communication between the mobile device and the stationary device.

To allow the storing of the communication signal, the mobile device which is used in the method according to the present invention could be provided with storage means which could comprise any suitable storage means adapted to allow on the mobile device the storage, the reading and possible deleting of a specific amount of data relating to the generated communication signal.

As shown in figure 1, a third step 120 of the method according to the present invention comprises the step of activating a GPS application in the mobile device to generate a parameter corresponding to the geographical location of the mobile device. To allow this step of the method, the mobile device to be used in the method according to the present invention comprises a GPS application which is adapted to establish the geographical location of the mobile device. The step of activation of the GPS application to thereby generate a parameter is adapted to generate information which could be used to check the physical position of the mobile device at the time of establishing a communication between a mobile device and a stationary device.

In order to allow the GPS application to be used as a generator for providing a control means for establishing the position of the mobile device during communication, according to the fourth step 130 of the method, the parameter corresponding to the geographical location of the mobile device is stored, for instance, in the storage means of the mobile device, or in the Cloud if the mobile device has an access to Internet or in any other adapted storage. This step is executed to obtain a secured communication signal which comprises both the communication signal generated in the first step 100 of the method and the parameter generated in the third step 120 of the method according to the invention.

The secured communication signal which comprises not only the communication signal between the mobile device and the stationary device but also a parameter representative of the geographical location of the mobile device during the establishment of the communication, can be compared to data corresponding to the specific position of the stationary device used in the method according to the invention. This step of comparing is mentioned in step five 140.

In practice, this means that, prior to authorising an advantage such as a coupon or a discount to be available on the mobile device, firstly the secured communication signal is compared with data comprising information about the stationary device. This is to check whether the communication was actually established at a specific geographical position corresponding to the geographical position of the stationary device. The effect of this step of checking the location of the mobile device during a communication with a stationary device is that possible abuse for obtaining advantages linked to the stationary device can be avoided.

A first possible abuse that can be avoided is the fact that the signal corresponding to the communication between the stationary device and the mobile device can be made available to users of mobile devices who are at a different geographical location, remotely from the stationary device. For instance, a communication signal established between a mobile device and a stationary device could be made accessible via the Internet and then duplicated by another fake stationary device that is remote from the original stationary device. In that case, any user of a mobile device could pretend to have established communication with the original stationary device while in reality the mobile device has never been in the vicinity of the original stationary device. In order to allow the step of checking whether the communication between the mobile device and the stationary device is effectively established between the stationary device and a mobile device in the vicinity of the stationary device, the method according to the present invention could comprise the step of creating a database comprising a look-up table, wherein the look-up table comprises values of a second parameter associated with the stationary device and the corresponding geographical location of said stationary device.

The use of the look-up table can comprise comparing the values of the first parameter corresponding to the geographical location of the mobile device generated by the GPS application of the mobile device during the establishment of the communication between the mobile device and the stationary device with values of the second parameter to retrieve a matching value between the first and the second parameters.

In practice, this means that the geographical position of the stationary device will be available in a look-up table. The parameter corresponding to the actual position of the mobile device during communication with the stationary device, generated by the GPS application of the mobile device, should be within a determined range linked to the geographical location of the stationary device. For instance, the parameter generated by the GPS application of the mobile device during communication should be within 100 meters of the GPS location linked to this stationary device as represented in the look-up table.

According to the present invention, the step of checking the authenticity of the communication between the mobile device and the stationary device comprises the step of comparing the geographical location of the mobile device during the communication with the stationary device with the geographical position of the stationary device to retrieve a matching value. The matching value should be within a set range in order to confirm the presence of the mobile device in the vicinity of the stationary device during the communication.

According to the invention, provided that the matching value as described above is retrieved, an authorisation signal could be received by the mobile device to obtain a specific advantage. This advantage could either be a coupon, a discount of any other advantage made available to the user of the mobile device.

It should be understood that the production of the secured communication signal between a stationary device and a mobile device could be used with any adapted communication protocol being used for communication between a stationary device and a mobile device. This means that the method according to the present invention includes communication obtained using NFC protocol between a stationary device such as, for instance, a tag and a mobile device provided with an application adapted to read such a tag. This also means that the method according to the present invention includes communication obtained using Bluetooth Low Energy protocol between a stationary device such as, for instance, an iBeacon and a mobile device provided with an application adapted to receive such an iBeacon information. According to the present invention the method and the system according to the invention could be used for monitoring the operation of iBeacons. The objective would be to allow an owner of iBeacons to monitor the position and the functioning of his iBeacons and to provide the possibility to detect possible anomalies.

The monitoring of iBeacons could include the following procedure: if a mobile device detects an iBeacon, as described in detail above, the mobile device activates the GPS application to generate a parameter corresponding to the geographical position of the mobile device and add this information to the communication signal received by the mobile device from the iBeacon to obtain a secured communication signal. In addition to comparing the obtained secured communication signal with a reference value, the secured communication signal could be sent to processing means, such as a server, adapted to monitor possible changes over time. The processing means should be adapted to store both the received secured communication signal and the time and date on which the secured communication signal was received.

After a certain time interval the processing means will contain, for any iBeacon in the system, a number of entries each comprising the identification of the iBeacon, the GPS position of the iBeacon (which together form the secured communication signal) and the time and date each entry was received. If, the GPS position of any iBeacon would change over time, the owner of the iBeacon could receive an alert to indicate that the iBeacon was either displaced or duplicated.

A further possibility for monitoring a series of iBeacons would be to provide the mobile device with a table containing information relating to GPS positions at which iBeacons should be expected. If the mobile device detects that it is in a position wherein the mobile device should receive a signal from an iBeacon, but such signal is not received, the mobile device could send this information to processing means, such as a server. The information could be used by an owner of iBeacons to detect the displacement or inoperability of one or more iBeacons.

Based on the observations above it would be possible to use an application to review the position and functioning of iBeacons, by either dedicated maintenance staff or by the general public. If maintenance staff is used to review the functioning of iBeacons, an operator equipped with a mobile device having a dedicated application, could be present in the area where iBeacons are supposed to be operating. In case the operator would detect that an iBeacon is not present at the expected position, the operator would be able to detect this.

Alternatively, the review could be done by means of the general public. This means that a series of mobile device of users receive and send information on iBeacons in a system towards a server. The server is adapted to review the received information and base on the information conclusions on the status and position of the iBeacons. Alternatively, the method according to the present invention could be used for wireless communication between one or more beacons in a form of a transceiver and a mobile device adapted to communicate with said one or more beacons.

The present invention is particularly adapted to allow communication between a mobile device and one or more iBeacons. iBeacons have been developed and made available by Apple®. iBeacons typically use small wireless transmitters equipped with Bluetooth low-energy (BLE). iBeacon communication runs on iOS 7 which allows iBeacons to communicate with iPhones and iPad commercialised by Apple® but also runs on Android which allows communication between the iBeacons and Android mobile devices.

## Claims

1. A method for securing a communication signal between a mobile device and a stationary device, the mobile device and the stationary device being configured for short distance communication in a determined zone around the stationary device, wherein the mobile device comprises receiving means connected to storage means and a Global Positioning System (GPS) application, the method comprising the steps of:
- establishing communication between the mobile device and the stationary device to thereby generate a communication signal;
- receiving the communication signal by means of the receiving means and storing the same in the storage means ;
- activating the GPS application to generate a parameter, wherein the value of the parameter corresponds to the geographical location of the mobile device;
- adding the parameter to the stored communication signal to obtain a secured communication signal;
- comparing the secured communication signal with a reference value.

2. Method according to claim 1, wherein the stationary device and the mobile device are configured for communicating using Near Field Communication (NFC) protocol.

3. Method according to claim 2, wherein the stationary device and the mobile device are configured to allow communication using a Quick Response Code (QRCode).

4. Method according to claim 1 wherein the stationary device is a transmitter.

5. Method according to claim 4, wherein the stationary device is adapted for communication with the mobile device using Bluetooth low Energy™ technology.

6. Method according to claim 5, wherein the mobile device is adapted to detect the presence of the stationary device and to detect that it (the said mobile device) is in the determined zone around said stationary device.

7. Method according to any of the preceding claims wherein the mobile device comprises a connector for allowing the mobile device to have access to the Internet in order to connect the receiving means with storing means on the Cloud.

8. Method according to any preceding claims, wherein the method further comprises creating a database comprising a look-up table with reference values, wherein the look-up table comprises values of a second parameter associated with at least one stationary device and the corresponding geographical location of said at least one stationary device.

9. Method according to claim 8, wherein the method further comprises comparing the value of the first parameter corresponding to the geographical location of the mobile device generated by the GPS application of the mobile device with values of second parameters to retrieve a matching value between the first and the second parameters.

10. Method according to claim 9, wherein the method further comprises allowing the mobile device to receive an authorisation signal when a matching value is retrieved.

11. Method according to claim 9, wherein the method further comprises the step of allowing the mobile device to generate an alert when a matching value is not retrieved.

12. A computer program product comprising stored computer-executable instructions, which, when executed by a computer system, implements the method of any of claims 1 to 11.

13. A mobile device comprising communication means for allowing short distance communication with a stationary device to allow the mobile device receiving a communication signal from said stationary device, the mobile device further comprising a connection with a storing means for storing said communication signal, a Global Positioning System (GPS) application adapted to generate a parameter corresponding to the geographical position of said mobile device application, and processing means adapted to provide an instruction for the GPS application to generate a parameter wherein the value of the parameter corresponds to the geographical position of the mobile device upon establishment of a communication made between the mobile device and the stationary device, wherein processing means are adapted to add said parameter to said communication signal to obtain a secured communication signal and to store said secured communication signal in said storing means.

14. A mobile device according to claim 13, wherein the mobile device comprises a connector for allowing the mobile device to access to the Internet.

15. A mobile device according to claim 13 or 14 wherein the processing means are adapted to compare the stored secured communication signal with information stored in a look up table in a database comprising information about stationary devices and their geographical position.
